# EUROPEAN PATENT APPLICATION

(11) **EP 2 023 349 A1**
(43) Date of publication of application: **11.02.2009**
(21) Application number: 07113810.1
(22) Date of filing: 03.08.2007
(51) Int. Cl.: G11B 27/034, G11B 27/32, G06F 17/30

(54) **Device, program, and method for obtaining audio attribute data**

(71) Applicant: Transtechnology, Inc., Tokyo 108-0075 (JP)
(72) Inventor: Hiratsuka, Koh Transtechnology, Inc., Minato-ku, Tokyo 108-0075 (JP); Sakamoto, Akira Transtechnology, Inc., Minato-ku, Tokyo 108-0075 (JP); Yoshikura, Yasuto Nagase &Co., Ltd., Chuo-ku Tokyo 103-8355 (JP)
(74) Representative: Stebbing, Timothy Charles

(57) **Abstract**

There is provided a device having reading means for reading TOC data and audio data sets from a compact disk, conversion means for transcoding the audio data sets read by the reading means to generate transcoded audio data sets, and generation means for generating a file or file group including the TOC data read by the reading means and the transcoded audio data sets generated by the conversion means, the file or file group having order information specifying order of the transcoded audio data sets as originally recorded on the compact disk.

## Description

### Background

### Technical Field

The present invention relates to a technique for obtaining data having an attribute of a song.

### Related Art

Portable music file playback terminals (hereinafter "memory players") having a memory device such as a hard disk are now in widespread use. Unlike more conventional portable music players, memory players record audio data on rewritable memory devices that are provided inside the players. Hence, users of such memory players are able to listen to songs in any place without the need for carrying around recorded media such as compact disks or MDs. Since facilities for recording media need not be built in, memory players there has been achieved a remarkable downsizing and improved portability of memory players.

To listen to a song by using a memory player, there is required a process of creating an audio data file from a compact disk or the like, or obtaining the file from the Internet, followed by a process of storing the audio data file in a memory device. At this time, audio data can be added, together with data indicating attributes of the song (hereinafter "song attribute data"), such as a song's name and an artist's name. If such song attribute data is added and is then appropriately displayed during playback, the audio data can be managed in such a manner that users are able to visually recognize a music file with great ease.

As is well known, a TOC (Table Of Contents) area of a music compact disk records, as so-called TOC data, binary data indicating lengths of time until playback of recorded songs starts. For example, there has already been practiced a system in which downloading of song attribute data of an album uniquely specified by TOC data is permitted in exchange for a request transmitted to a server, including the TOC data read from a TOC area of a music compact disk. Such a system is employed by, for example, Gracenote CDDB (registered trademark).

In order to download song attribute data to an audio device by using techniques according to related arts, the audio device needs to be able to communicate with a server via a network while a music compact disk is loaded in the audio device. That is, there a problem exists in that song attribute data cannot be downloaded if the audio device is not able to communicate with a server via a network, or if the audio device does not have any means for reading data from a music compact disk.

### Summary

The present invention has as its object the provision of a mechanism which allows an audio device to receive song attribute data distributed by using TOC data of a music compact disk, even in a case that the audio device cannot communicate with a server while the music compact disk is set in the audio device, or in a case that the audio device does not have any means for reading data from the music compact disk.

According to an aspect of the present invention, there is provided a device having: reading means for reading TOC data and at least one audio data set from among one or more encoded audio data sets, from a compact disk on which is recorded the TOC data and the one or more encoded audio data sets, the TOC data indicating a playback start timing of each of the one or more encoded audio data sets when the one or more encoded audio data sets are played sequentially in an order recorded on the compact disk; conversion means transcoding the at least one audio data set read by the reading means, to generate at least one audio data set encoded in accordance with an encoding scheme different from an encoding scheme applied to the at least one audio data set recorded on the compact disk; and generation means for generating a file or file group including the TOC data read by the reading means and the at least one audio data set generated by the conversion means, the file or file group having order information specifying order of the at least one audio data set generated by the conversion means as originally recorded on the compact disk. (This exemplary embodiment is called as embodiment 1 in this section.)

In the device of embodiment 1, the device may further have transmission means for transmitting the file or file group generated by the generation means to an external device. (This exemplary embodiment is called as embodiment 2 in this section.)

In the device of embodiment 1, the device may further have memory means for storing the file or file group generated by the generation means. (This exemplary embodiment is called as embodiment 3 in this section.)

In the device of embodiment 3, the device may further have: transmission means for transmitting the TOC data included in the file or file group to a server device; reception means for receiving at least one audio attribute data set distributed from the server device in response to the TOC data transmitted by the transmission means; specification means for specifying at least one audio attribute data set respectively corresponding to the at least one audio data set stored in the memory means, from among the at least one audio attribute data set received by the reception means, on the basis of the order information; and update means for updating the file or file group by adding the at least one audio attribute data set specified by the specification means to the at least one audio data set corresponding to the at least one audio attribute data set. (This exemplary embodiment is called as embodiment 4 in this section.)

In the device of embodiment 4, the transmission means may transmit the TOC data to the server device through a radio communication device, and the reception means may receive the at least one audio attribute data set from the server device through the radio communication device. (This exemplary embodiment is called as embodiment 5 in this section.)

In the device of embodiment 4, the transmission means may transmit the TOC data to the server device by radio communication, and the reception means may receive the at least one audio attribute data set from the server device by radio communication. (This exemplary embodiment is called as embodiment 6 in this section.)

According to another aspect of the present invention, there is provided a device having: first reception means for receiving, from an external device, a file or file group including at least one audio data set generated by transcoding at least one audio data set encoded and recorded on a compact disk, and TOC data indicating playback start timings at which the at least one audio data set is played sequentially in recorded order as the at least one audio data set is recorded on the compact disk, the file or file group having order information specifying order of the at least one audio data set generated by the transcoding as originally recorded on the compact disk; memory means for storing the file or file group received by the first reception means; transmission means for transmitting the TOC data included in the file or file group stored in the memory means to a server device; second reception means for receiving at least one audio attribute data set distributed from the server device in response to the TOC data transmitted by the transmission means; specification means for specifying at least one audio attribute data set respectively corresponding to the at least one audio data set stored in the memory means, from among the at least one audio attribute data set received by the second reception means, on the basis of the order information; and update means for updating the file or file group by adding the at least one audio attribute data set specified by the specification means to the at least one audio data set corresponding to the at least one audio attribute data set. (This exemplary embodiment is called as embodiment 7 in this section.)

In the device of embodiment 7, the transmission means may transmit the TOC data to the server device through a radio communication device, and the second reception means may receive the at least one audio attribute data set from the server device through the radio communication device. (This exemplary embodiment is called as embodiment 8 in this section.)

In the device of embodiment 7, the transmission means may transmit the TOC data to the server device by radio communication, and the second reception means may receive the at least one audio attribute data set from the server device by radio communication. (This exemplary embodiment is called as embodiment 9 in this section.)

According to another aspect of the present invention, there is provided a program by which a computer having reading means for reading data recorded on a compact disk is caused to execute: reading TOC data and at least one audio data set from among one or more encoded audio data sets, from a compact disk on which is recorded the TOC data and the one or more encoded audio data sets, the TOC data indicating a playback start timing of each of the one or more encoded audio data sets when the one or more encoded audio data sets are played sequentially in an order recorded on the compact disk; transcoding the read at least one audio data set to generate at least one audio data set encoded in accordance with an encoding scheme different from an encoding scheme applied to the at least one audio data set recorded on the compact disk; and generating a file or file group including the read TOC data and the at least one audio data set generated by the transcoding, the file or file group having order information specifying order of the at least one audio data set generated by the transcoding as originally recorded on the compact disk. (This exemplary embodiment is called as embodiment 10 in this section.)

According to another aspect of the present invention, there is provided a program by which a computer having communication means for making data communication between an external device and a server device is caused to execute: receiving, from the external device, a file or file group including at least one audio data set generated by transcoding at least one audio data set encoded and recorded on a compact disk, and TOC data indicating playback start timings at which the at least one audio data set is played sequentially in recorded order as the at least one audio data set is recorded on the compact disk, the file or file group having order information specifying order of the at least one audio data set generated by the transcoding as originally recorded on the compact disk; storing the received file or file group; transmitting the TOC data included in the stored file or file group to the server device; receiving at least one audio attribute data set distributed from the server device in response to the transmitted TOC data; specifying at least one audio attribute data set respectively corresponding to the stored at least one audio data set, from among the received at least one audio attribute data set, on the basis of the order information; and updating the file or file group by adding the specified at least one audio attribute data set to the at least one audio data set corresponding to the at least one audio attribute data set. (This exemplary embodiment is called as embodiment 11 in this section.)

According to another aspect of the present invention, there is provided a method executed by a device, the method having: reading TOC data and at least one audio data set from among one or more encoded audio data sets, from a compact disk on which is recorded the TOC data and the one or more encoded audio data sets, the TOC data indicating a playback start timing of each of the one or more encoded audio data sets when the one or more encoded audio data sets are played sequentially in an order recorded on the compact disk; transcoding the read at least one audio data set to generate at least one audio data set encoded in accordance with an encoding scheme different from an encoding scheme applied to the at least one audio data set recorded on the compact disk; and generating a file or file group including the read TOC data and the at least one audio data set generated by the transcoding, the file or file group having order information specifying order of the at least one audio data set generated by the transcoding as originally recorded on the compact disk. (This exemplary embodiment is called as embodiment 12 in this section.)

According to another aspect of the present invention, there is provided a method executed by a device, the method having: receiving, from an external device, a file or file group including at least one audio data set generated by transcoding at least one audio data set encoded and recorded on a compact disk, and TOC data indicating playback start timings at which the at least one audio data set is played sequentially in recorded order as the at least one audio data set is recorded on the compact disk, the file or file group having order information specifying order of the at least one audio data set generated by the transcoding as originally recorded on the compact disk; storing the received file or file group; transmitting the TOC data included in the stored file or file group to a server device; receiving at least one audio attribute data set distributed from the server device in response to the transmitted TOC data; specifying at least one audio attribute data set respectively corresponding to the stored at least one audio data set, from among the received at least one audio attribute data set, on the basis of the order information; and updating the file or file group by adding the specified at least one audio attribute data set to the at least one audio data set corresponding to the at least one audio attribute data set.

According to the present invention, an audio device is able to receive song attribute data distributed by using TOC data of a music compact disk, even in a case that the audio device cannot communicate with a server while the music compact disk is placed in the audio device, or even in a case that the audio device does not have any means for reading data from the music compact disk.

### Brief Description of the Drawings

An exemplary embodiment of the present invention will be described in detail based on the following figures, wherein:
FIG. 1 shows an example of binary data recorded on a TOC area;
FIG. 2 is a diagram showing an entire structure of a data distribution system;
FIG. 3 shows a schematic hardware structure of a mini component stereo set;
FIG. 4 illustrates an appearance of a memory player;
FIG. 5 shows a schematic hardware structure of the memory player;
FIG. 6 shows a schematic hardware structure of the data distribution server;
FIG. 7 shows a data structure of a song attribute database;
FIG. 8 is a flowchart showing a song attribute download process;
FIG. 9 shows a structure of a TOC data file; and
FIG. 10 shows a recording scheme for recording the TOC data.

### Detailed Description

An exemplary embodiment of the present invention will now be described below.

In this specification, a term "song" is used as a synonym of "musical composition", and the term should be interpreted to cover both musical composition with lyrics and musical composition without lyrics. Accordingly, for example, a phrase "song attribute" in this specification can be replaced with "audio attribute" or the like.

Described first is content that is recorded on a TOC area of a music compact disk (hereinafter "CD"), as a precondition for proper understanding of the embodiment. A TOC area is an area reserved inside of a program area where PCM (Pulse Code Modulation) audio data is written, for recording a relatively small volume of binary data.

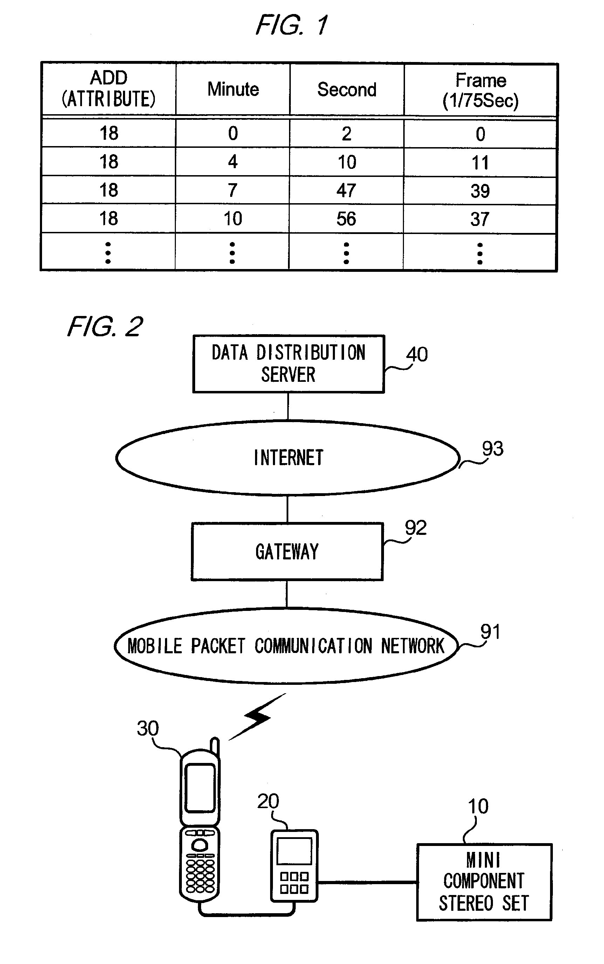

FIG. 1 is a table showing an example of binary data recorded on the TOC area. As shown in the table, lengths of time until playback of songs starts are recorded in the order the corresponding songs are recorded. Referring to the example in the table, playback of the first song starts at a timing when two seconds have elapsed from the top of a program area. Playback of the second song starts at a timing when four minutes, ten seconds, and eleven frames have elapsed, as can be seen from the table. One frame is equivalent to 1/75 seconds. Naturally, different albums cannot have one equal combination of playback start timings for songs recorded in their own albums. Accordingly, a bit array of bits constituting binary data recorded on a TOC area is specific only to one album.

FIG. 2 shows an entire structure of a data distribution system according to this embodiment. The system is constituted by a mini component stereo set 10, a memory player 20, a mobile phone 30, and a data distribution server 40. A user of this system owns at least one mini component stereo set 10, one memory player 20, and one mobile phone 30. The mobile phone 30 is capable of exchanging data with the data distribution server 40 via a mobile packet communication network 91, a gateway 92, and the Internet 93.

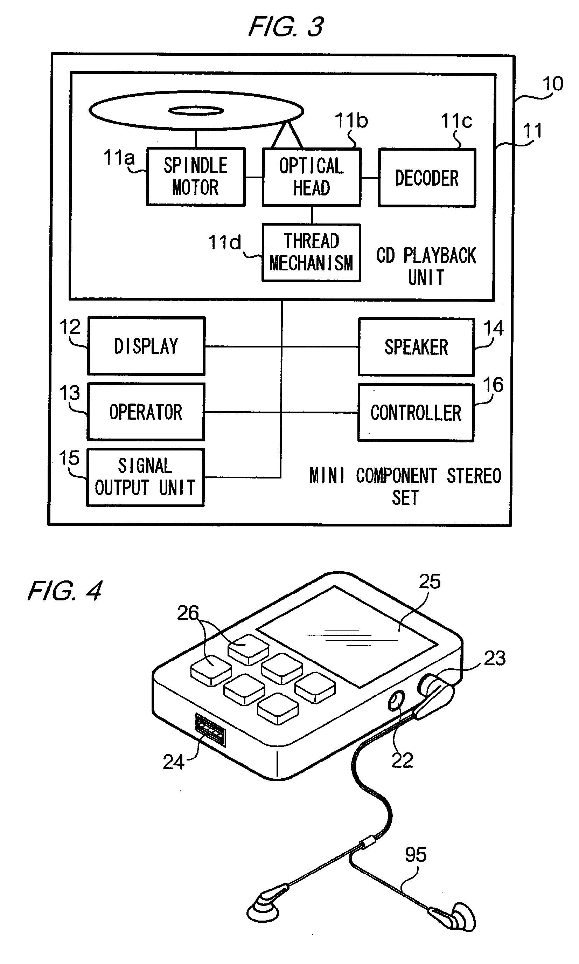

FIG. 3 is a block diagram showing a schematic hardware structure of the mini component stereo set 10. The mini component stereo set 10 includes a CD playback unit 11, a display 12, an operator 13, a loudspeaker 14, a signal output unit 15, and a controller 16 for controlling operations of the foregoing units.

As shown in the figure, the CD playback unit 11 includes a spindle motor 11 a, an optical head 11b, a decoder 11c, and a thread mechanism 11d. Functions of these units will be schematically described below. A CD loaded in the CD playback unit 11 is driven to rotate at a constant velocity by the spindle motor 11 a. The optical head 11b internally has a laser diode, a photo-deflector, an objective lens, and other optical systems. The optical head 11b reads data recorded on a CD while the head is moving in a radial direction of the disk, guided by a thread mechanism 11d. The decoder 11c converts PCM audio data read from a program area of a CD by the optical head 11b into analog audio signals.

The display 12 displays various items of information, such as playback time lengths and song numbers, under control of the controller 16.

The operator 13 accepts various operations such as an instruction about a mode or skipping of a song. The mini component stereo set 10 is capable of specifying a file transfer mode in addition to a normal playback mode. If the normal playback mode is specified, the controller 16 supplies the loudspeaker 14 with an analog audio signal obtained as the decoder 11c converts PCM audio data. In this manner, songs recorded on a CD can be output as music sounds from the loudspeaker 14. On the other hand, if the file transfer mode is specified, the controller 16 transcodes PCM audio data of respective songs read from the program area of a CD, and generates audio data files in the MP3 (MPEG Audio Layer-3) format. In addition, the controller 16 generates a TOC data file, which includes binary data read from the TOC area of the CD and various other data, and supplies these files to the memory player 20 through the signal output unit 15.

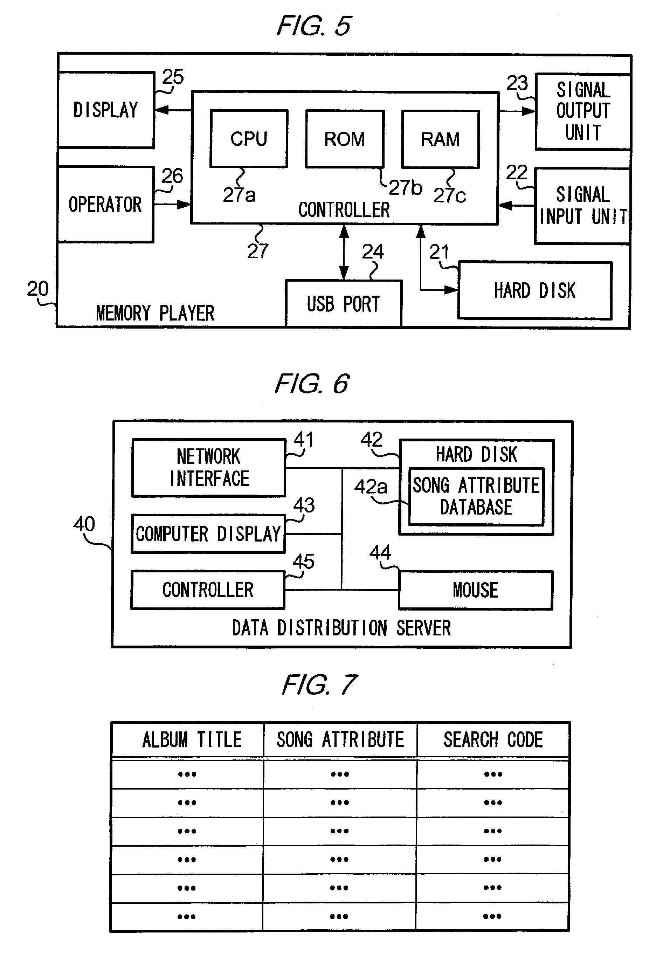

FIG. 4 shows an appearance of the memory player 20. FIG. 5 is a diagram schematically showing a hardware structure of the memory player 20. The memory player 20 has a hard disk 21 as a memory device, a signal input unit 22, a signal output unit 23, a USB (Universal Serial Bus) port 24, a display 25, an operator 26, and a controller 27 for controlling the foregoing units. The controller 27 internally has a CPU 27a, a ROM 27b, a RAM 27c, etc. The CPU 27a of the controller 27 controls respective units inside the memory player 20 by executing various programs stored in the ROM 27b and hard disk 21. The programs include various programs, such as a USB host driver for enabling connection to the mobile phone 30 via the USB port 24, a TCP/IP (Transmission Control Protocol/Internet Protocol) driver for making Internet communication via the mobile phone 30, a dialer, a modem controller, CODECs for performing audio compression/expansion, etc.

The signal input unit 22 is a line input jack which supplies the controller 27 with data input from the mini component stereo set 10. The signal output unit 23 is a line output jack which outputs, to a headphone 95, analog audio signals supplied from the controller 27.

While the memory player 20 plays an audio data file, the display 25 displays song attribute data of the song and also displays various screens in response to a user's operations.

The operator 26 has various buttons and is used to give instructions to the controller 27; for example, to start or stop playback of a song in response to input from the user. The USB port is an interface for exchanging data with the mobile phone 30.

Description will now be made referring again to FIG. 2.

The mobile phone 30 has a radio communication function capable of accessing the Internet 93 via the mobile packet communication network 91. The mobile phone 30 is connected to the memory player 20 via a USB modem cable, and functions as a client device relative to the memory player 20 as a host device. In this case, communication schemes of the mobile phone 30 are not particularly restricted. For example, a so-called second generation PDC (Primary Domain Controller) scheme is applicable, or a so-called third generation IMT (International Mobile Telecommunication) - 2000 scheme is available.

The mobile packet communication network 91 and the Internet 93 each is a network constituted of nodes which transfers data in accordance with its own specific transfer protocols. Transfer protocols which the Internet 93 follows include TCP/IP for a network layer and a transport layer, and HTTP and HTTPS protocols established on the TCP/IP. Meanwhile, protocols which the mobile packet communication network 91 follows include simplified TCP/IP and protocols equivalent to HTTP (and HTTPS).

The gateway 92 is a computer system provided in a mobile packet gateway relay switching center for mutually connecting the mobile packet communication network 91 and the Internet 93, and converts different communication protocols between networks.

FIG. 6 is a diagram schematically showing a hardware structure of the data distribution server 40. As shown in the figure, the data distribution server 40 has: a network interface 41 that manages data exchange with the Internet 93; a hard disk 42 that stores a song attribute database 42a; a computer display 43 that displays various information; a mouse 44 that is used to input various information; and a controller 45 that controls the foregoing units.

FIG. 7 is a table showing a data structure of the song attribute database 42a. This song attribute database 42a is an aggregate of plural records respectively corresponding to albums each recorded on a CD. Each one of the records constituting the database has three fields of "album title", "song attribute", and "search code".

Album title information indicating a title of an album is stored in the field of "album title".

A group of song attribute data sets is stored in the field of "song attribute". The group of song attribute data sets includes song attribute data sets for respective songs recorded in one album, arranged in recorded order of the songs. That is, in this field, data sets indicating artist names, song names, and the like are recorded sequentially arranged in order from the song recorded on the first track of the album.

Search code data is stored in the field of "search code". The search code data expresses the same bit array as binary data stored in the TOC area of the CD. As has been described, binary data recorded in the TOC area of a CD has a bit array which is specific only to one album. If a search is carried out using, as a search key, binary data recorded in the TOC area in a CD, the record to be referred to can be specified from the database.

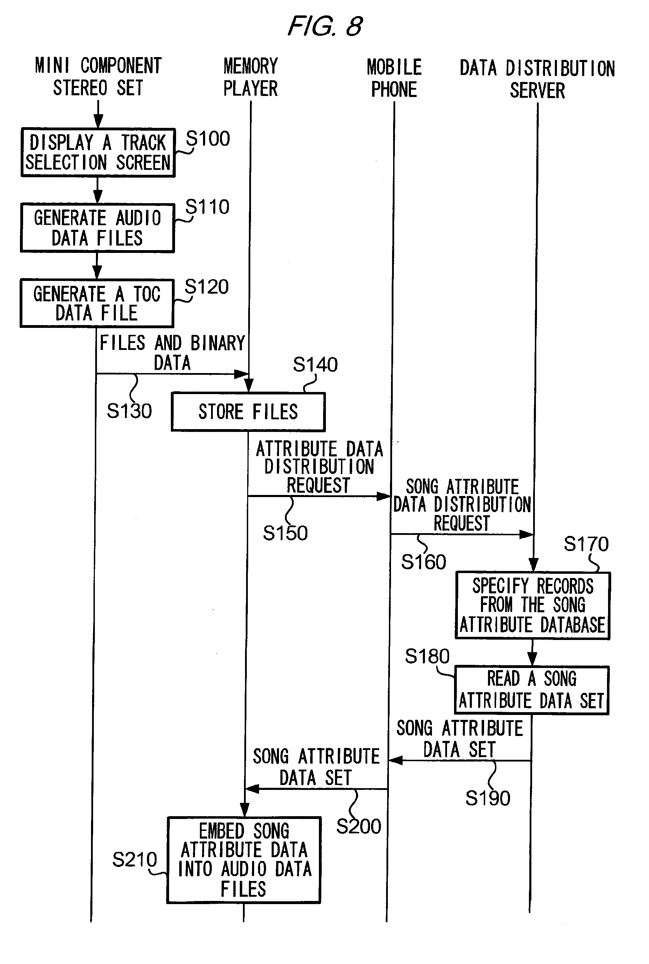

FIG. 8 is a flowchart showing a song attribute download processing as a characterizing feature of this embodiment.

The processing shown in the figure is triggered when an instruction on startup in the file transfer mode is given by the operator 13 of the mini component stereo set 10 in a state as follows. The state is that the signal output unit 15 of the mini component stereo set 10 is connected via a cable to the signal input unit 22 of the memory player 20, and the USB port 24 of the memory player 20 is connected to the mobile phone 30, and a CD is loaded in the CD playback unit 11 of the mini component stereo set 10.

If an instruction to start up in the file transfer mode is given, the controller 16 causes the display 12 to show a track selection screen (S100). The track selection screen shows a character string "Select a track number (or numbers) of a song (or songs) to create an audio file", and also shows track numbers of songs recorded on the CD. The track numbers of respective songs can be specified based on binary codes recorded on the TOC area of the CD. For example, if five sets of binary data indicating lengths of time until playback are recorded on the TOC area, track numbers 1 to 5 are displayed. Otherwise, if ten sets of such binary data are recorded, 1 to 10 are displayed as track numbers.

The user who is referring to the track selection screen uses the operator 13 to select one or more track numbers of one or more songs which the user wants to convert into one or more audio files. Then, the user enters an instruction to fix the selected track number or numbers. After the selected track number or numbers are fixed, the controller 16 generates an audio data file of the selected song or audio data files of the selected songs sequentially (S110). The audio data file or files are generated by reading of PCM audio data, sequentially for one after another of the song or songs assigned to the selected track number or numbers, and by converting (transcoding) the data format of the read audio data from PCM into MP3. As a result, audio data files corresponding in number to the track numbers selected on the track selection screen are obtained through this step.

The controller 16 subsequently generates a TOC data file (S120). The TOC data file includes binary data recorded on the TOC area of the CD, and data concerning audio data files generated in the step S110.

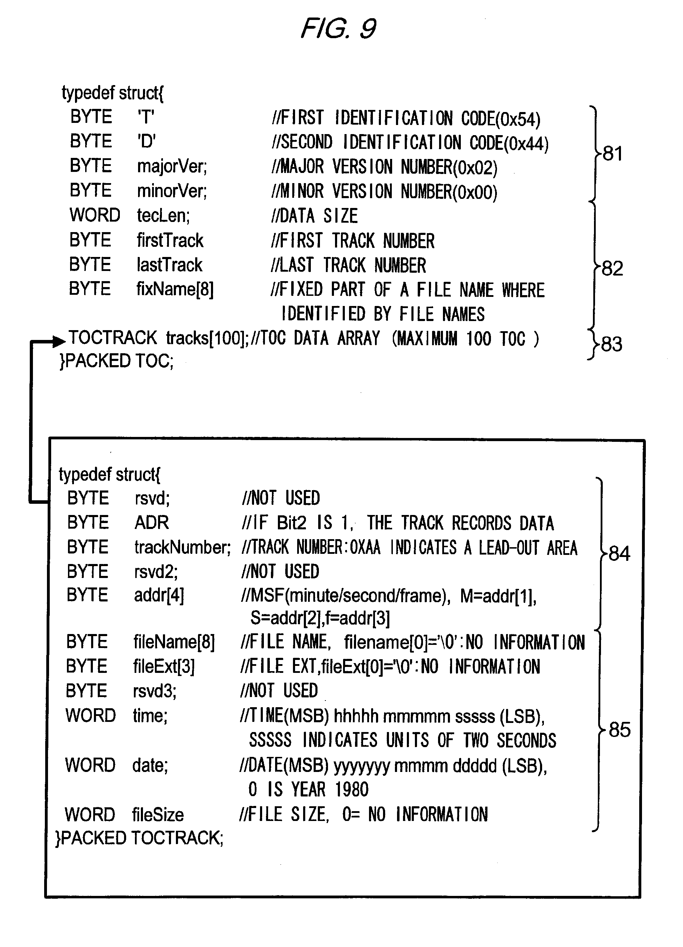

Referring to FIG. 9, a structure of the TOC data file will be described in detail below. FIG. 9 is a diagram showing the structure of the TOC data file. As shown in the figure, the TOC data file includes a file identification part 81, a global information part 82, and a TOC part 83.

Recorded in the file identification part 81 is binary data for identifying what version the TOC data file is. The binary data is constituted of a first identification code 'T', a second identification code 'D', major version information majorVer, and minor version information minorVer. Content recorded in the file identification part 81 is preset independently from recorded content of the CD, e.g., the first identification code 'T' is Ox54 and the second identification code 'D' is Ox44. At present, the major version number majorVer is 0x02, and the minor version number minorVer is 0x00. When the structure of the TOC data file needs to be changed in the future, values of these version numbers are updated together.

Recorded in the global information part 82 are: a data size tecLen of the TOC data file itself; a track number firstTrack of the first song, whose audio data file was generated first; a track number lastTrack of the last song, whose audio data file was generated last; and binary data fixName indicating a fixed character string in case of a setting for identifying file names of audio data files each by "fixed character string + track number" (i.e., the fixed character string corresponds to a part excluding the track number therefrom).

The TOC part 83 records sequentially paired TOC information parts 84 and file information parts 85, corresponding in number to the number of PCM audio data files recorded on the CD. The TOC part 83 is capable of containing, at most, 100 pairs of TOC information parts 84 and file information parts 85.

Each of the above information parts will now be described in more detail below. At first, in each TOC information part 84, binary data addr indicating a start timing of a song is recorded subsequent to binary data indicating attributes of rsvd, ADR, trackNumber, and rsvd2. For example, as far as the first TOC information part 84 included in the TOC part 83 is concerned, binary data indicating a playback start timing of a song on the first track is extracted from the TOC area and included in the TOC information part 84. In the file information part 85, binary data indicating attributes of fileExt, rsvd3, time, date, and fileSize is recorded subsequent to binary data of fileName indicating a generated file name if an audio data file of a song of a corresponding track has been generated in the step S120. On the other hand, with respect to tracks not selected by the user, a value Null or the like is recorded as fileName, fileExt, rsvd3, time, date, and fileSize.

The figure shows only one pair of TOC information part 84 and file information part 85. However, if plural songs are recorded on a CD, plural pairs of TOC information parts 84 and file information parts 85 are sequentially written as has been described previously, wherein the TOC information parts 84 respectively include binary data concerning the plural songs while the file information parts 85 respectively include file names of audio data files corresponding to the songs (if the user selects tracks of the songs).

In FIG. 8, the controller 16 of the mini component stereo set 10 outputs the audio data file or files generated in the step S110 and the TOC data file generated in the step S120, to the memory player 20 through the signal output unit 15 (S 130).

When the audio data file or files and the TOC data file are input to the memory player 20 through the signal input unit 22, the controller 27 of the memory player 20 then stores the audio data file or files and the TOC data file into the hard disk 21 (S140).

Subsequently, the controller 27 generates binary data for the TOC area from the addr in the TOC information part 84 included in the TOC data file input through the signal input unit 22, and sends a song attribute data distribution request including the generated binary data identical to the binary data recorded in the TOC area of the CD, to the mobile phone 30 through the USB port 24 (S 150).

After the song attribute data distribution request is sent to the mobile phone 30, the mobile phone 30 sends the song attribute data distribution request as a radio signal from a radio communication unit of the mobile phone 30 to the mobile packet communication network 91 (S160).

The radio signal of the song attribute data distribution request sent from the mobile phone 30 is transferred to the data distribution server 40 as a destination on the Internet 93 via a base station and an exchange station which form part of the mobile packet communication network 91 and further through protocol conversion at the gateway 92.

The controller 45 of the data distribution server 40 receives the song attribute data distribution request sent from the mobile phone 30 via the network interface 41, and specifies a record from the song attribute database 42a in the hard disk 42. The record to be specified stores, in the field of "search code", search code data having the same bit array as binary data of the TOC area, which is included in the request (S 170).

The controller 45 reads a group of song attribute data sets stored in the field of "song attribute" in the record specified in the step S 170 (S 180).

Further, the controller 45 sends the group of song attribute data sets read in the step S180 via the network interface 41, addressed to the mobile phone 30 as a sender of the song attribute data distribution request (S 190).

The group of song attribute data sets sent through the network interface 41 is transferred as a radio signal to the addressed mobile phone 30 via an exchange station and a base station which constitute the mobile packet communication network 91, after protocol conversion at the gateway 92.

The mobile phone 30 receives the group of song attribute data sets from the data distribution server 40, and then transmits the group of song attribute data sets to the memory player 20 (S200).

The group of song attribute data sets is input to the memory player 20 through the USB port 24. Then, the controller 27 of the memory player 20 specifies audio data files in the hard disk 21, into which song attribute data sets constituting the group should be embedded, based on content of the TOC data. The controller 27 embeds the song attribute data sets into the specified audio data sets (S210), respectively.

The processing of the step S210 will now be described in more detail below.

As has been described above, a group of song attribute data sets includes song attribute data sets for respective songs recorded in one album, with the song attribute data sets arranged in recorded order. On the other side, file information parts 85 of a TOC data file are binary data sets respectively indicating file names of audio data files generated from one CD. Therefore, the audio data files designated at the file names included in the file information parts 85 can respectively be related to the song attribute data sets included in the downloaded group of song attribute data sets. If a song attribute data set related to an audio data file is specified in this manner, the controller 27 of the memory player 20 carries out updating by adding the specified song attribute data set to the audio data file.

The song attribute download processing is thus finished.

Thereafter, the user operates the operator 26 to select one of audio data files having an embedded song attribute data set and gives an instruction to play back the selected file. The controller 27 then outputs an analogue audio signal obtained by decoding the selected audio data file to the headphones 95 through the signal output unit 23. Simultaneously, the controller 27 causes the display 25 to show attributes (a song name, artist name, lyrics, etc.) indicated by the song attribute data set embedded in the audio data file. The user can accordingly browse details of attributes of the song displayed on the display 25 while listening to sounds of the song output from the headphones 95.

As has been described above, according to this present embodiment, even a memory player 20 not having any means for reading data from a CD can generate and send a request for distribution of song attribute data by using a TOC data file generated by a mini component stereo set 10. Accordingly, even such a memory player 20 can receive song attribute data distributed from a data distribution server 40.

The invention can be variously modified in practice.

In the embodiment described above, song attribute data is distributed from the data distribution server 40 to the memory player 20 via the mobile phone 30 and displayed on the computer display 43 of the player. The song attribute data need not always express, as text lines, details of attributes of songs recorded on each CD such as song names, artist names, lyrics, etc. However, attributes of songs can be expressed as images such as still pictures (e.g., portraits) or videos of artists.

The above embodiment has described a system configuration in which a digital mini component stereo set is the device which reads audio data recorded on a program area of a CD and binary data recorded on a TOC area of the CD. However, a different audio device such as a portable CD player can substitute for the digital mini component stereo set.

In the above embodiment, the memory player 20 and the mobile phone 30 can be provided in one single housing. In other words, the memory player 20 and the mobile phone 30 in the above embodiment can be substituted by a mobile phone having a function of a memory player (or a memory player having a function of a mobile phone) which incorporates functions of both the memory player 20 and the mobile phone 30.

Also in the above embodiment, the mini component stereo set 10 generates audio data files of MP3 format from PCM audio data and sends the audio data files to the memory player 20. However, audio data files of a different data format can be generated depending on audio signal compression schemes which the memory player 20 can decode.

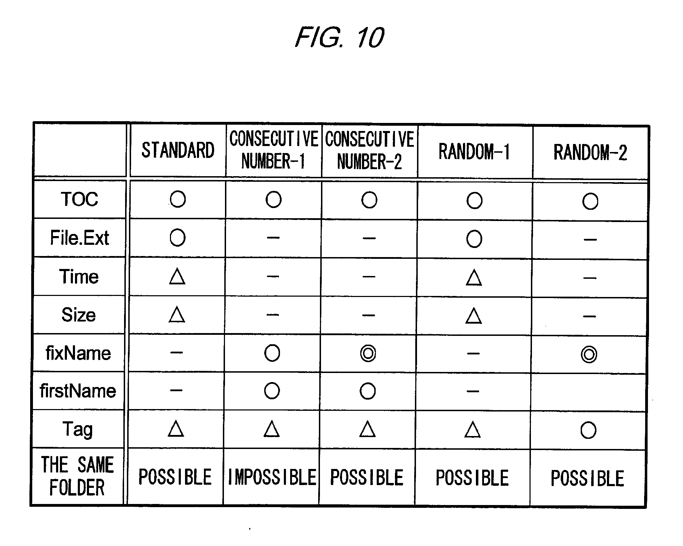

Also in the above embodiment, song attribute data sets are related to audio data files into which the song attribute data sets should be embedded, by referring to binary data indicating file names. In this respect, song attribute data sets and audio data files can be related to each other in a different manner, depending on variations of the structure of the TOC data file. FIG. 10 shows a variation of a recording scheme for recording a TOC data file which the present applicants are now trying to introduce into an audio device. In this figure, symbol of double circle indicates that content of binary data of an attribute marked with the symbol varies each time this attribute is created. Symbol of single circle indicates that binary data of an attribute marked with the symbol is a mandatory attribute. Symbol of triangle indicates that binary data of an attribute marked with the symbol is an optional attribute. Symbol "-" indicates that binary data of an attribute marked with the symbol "-" is not required.

According to schemes Standard, Consecutive number-1, and Consecutive number-2 shown in the figure, each file information part 85 in the TOC data file includes binary data of a file name including a track number. Therefore, a song attribute data set and an audio data file into which the song attribute data set should be embedded can be related to each other by a different manner from that of the above embodiment. According to schemes Random-1 and Random-2 shown in the figure, a file name including a track number is contained in a header of each created audio data file. Therefore, a song attribute data set and an audio data file into which the song attribute data set should be embedded can be related to each other by referring directly to the file name of the audio data file even without referring to the TOC data file.

In the above embodiment, the memory player 20 is equipped with the hard disk 21 as a memory device for storing audio data files and TOC data files. However, the hard disk 21 can be substituted by a different memory device such as SD memory card or a NAND-FLASH memory.

Also in the above embodiment, the mini component stereo set 10 and the memory player 20 can be provided in one single housing. A device constructed by providing the mini component stereo set 10 and the memory player 20 in one single housing will be hereinafter referred to as a "component stereo set with a memory player function".

According to the component stereo set with a memory player function, a TOC data file can be generated and stored even in a case that communication with the data distribution server 40 is disabled due to, for example, disconnection from the mobile phone 30 while a CD is loaded in the component stereo set with a memory player function.

There is a case that communication with the data distribution server 40 is enabled due to, for example, reconnection from the mobile phone 30 to the component stereo set with a memory player function after the CD is unloaded from the component stereo set. In this case, the component stereo set with a memory player function can generate binary data of a TOC area from the addr in TOC information parts 84 included in a stored TOC data file. The component stereo set sends, to the mobile phone 30, a song attribute data distribution request including the generated binary data of the TOC area.

As a result, song attribute data can be distributed from the data distribution server 40 even while the CD is not loaded in the component stereo set with a memory player function.

## Claims

1. A device comprising:
reading means for reading TOC data and at least one audio data set from among one or more encoded audio data sets, from a compact disk on which is recorded the TOC data and the one or more encoded audio data sets, the TOC data indicating a playback start timing of each of the one or more encoded audio data sets when the one or more encoded audio data sets are played sequentially in an order recorded on the compact disk;
conversion means transcoding the at least one audio data set read by the reading means, to generate at least one audio data set encoded in accordance with an encoding scheme different from an encoding scheme applied to the at least one audio data set recorded on the compact disk; and
generation means for generating a file or file group including the TOC data read by the reading means and the at least one audio data set generated by the conversion means, the file or file group having order information specifying order of the at least one audio data set generated by the conversion means as originally recorded on the compact disk.

2. The device according to claim 1, further comprising transmission means for transmitting the file or file group generated by the generation means to an external device.

3. The device according to claim 1, further comprising memory means for storing the file or file group generated by the generation means.

4. The device according to claim 3, further comprising:
transmission means for transmitting the TOC data included in the file or file group to a server device;
reception means for receiving at least one audio attribute data set distributed from the server device in response to the TOC data transmitted by the transmission means;
specification means for specifying at least one audio attribute data set respectively corresponding to the at least one audio data set stored in the memory means, from among the at least one audio attribute data set received by the reception means, on the basis of the order information; and
update means for updating the file or file group by adding the at least one audio attribute data set specified by the specification means to the at least one audio data set corresponding to the at least one audio attribute data set.

5. The device according to claim 4, wherein
the transmission means transmits the TOC data to the server device through a radio communication device, and
the reception means receives the at least one audio attribute data set from the server device through the radio communication device.

6. The device according to claim 4, wherein
the transmission means transmits the TOC data to the server device by radio communication, and
the reception means receives the at least one audio attribute data set from the server device by radio communication.

7. A device comprising:
first reception means for receiving, from an external device, a file or file group including at least one audio data set generated by transcoding at least one audio data set encoded and recorded on a compact disk, and TOC data indicating playback start timings at which the at least one audio data set is played sequentially in recorded order as the at least one audio data set is recorded on the compact disk, the file or file group having order information specifying order of the at least one audio data set generated by the transcoding as originally recorded on the compact disk;
memory means for storing the file or file group received by the first reception means;
transmission means for transmitting the TOC data included in the file or file group stored in the memory means to a server device;
second reception means for receiving at least one audio attribute data set distributed from the server device in response to the TOC data transmitted by the transmission means;
specification means for specifying at least one audio attribute data set respectively corresponding to the at least one audio data set stored in the memory means, from among the at least one audio attribute data set received by the second reception means, on the basis of the order information; and
update means for updating the file or file group by adding the at least one audio attribute data set specified by the specification means to the at least one audio data set corresponding to the at least one audio attribute data set.

8. The device according to claim 7, wherein
the transmission means transmits the TOC data to the server device through a radio communication device, and
the second reception means receives the at least one audio attribute data set from the server device through the radio communication device.

9. The device according to claim 7, wherein
the transmission means transmits the TOC data to the server device by radio communication, and
the second reception means receives the at least one audio attribute data set from the server device by radio communication.

10. A program by which a computer having reading means for reading data recorded on a compact disk is caused to execute:
reading TOC data and at least one audio data set from among one or more encoded audio data sets, from a compact disk on which is recorded the TOC data and the one or more encoded audio data sets, the TOC data indicating a playback start timing of each of the one or more encoded audio data sets when the one or more encoded audio data sets are played sequentially in an order recorded on the compact disk;
transcoding the read at least one audio data set to generate at least one audio data set encoded in accordance with an encoding scheme different from an encoding scheme applied to the at least one audio data set recorded on the compact disk; and
generating a file or file group including the read TOC data and the at least one audio data set generated by the transcoding, the file or file group having order information specifying order of the at least one audio data set generated by the transcoding as originally recorded on the compact disk.

11. A program by which a computer having communication means for making data communication between an external device and a server device is caused to execute:
receiving, from the external device, a file or file group including at least one audio data set generated by transcoding at least one audio data set encoded and recorded on a compact disk, and TOC data indicating playback start timings at which the at least one audio data set is played sequentially in recorded order as the at least one audio data set is recorded on the compact disk, the file or file group having order information specifying order of the at least one audio data set generated by the transcoding as originally recorded on the compact disk;
storing the received file or file group;
transmitting the TOC data included in the stored file or file group to the server device;
receiving at least one audio attribute data set distributed from the server device in response to the transmitted TOC data;
specifying at least one audio attribute data set respectively corresponding to the stored at least one audio data set, from among the received at least one audio attribute data set, on the basis of the order information; and
updating the file or file group by adding the specified at least one audio attribute data set to the at least one audio data set corresponding to the at least one audio attribute data set.

12. A method executed by a device, the method comprising:
reading TOC data and at least one audio data set from among one or more encoded audio data sets, from a compact disk on which is recorded the TOC data and the one or more encoded audio data sets, the TOC data indicating a playback start timing of each of the one or more encoded audio data sets when the one or more encoded audio data sets are played sequentially in an order recorded on the compact disk;
transcoding the read at least one audio data set to generate at least one audio data set encoded in accordance with an encoding scheme different from an encoding scheme applied to the at least one audio data set recorded on the compact disk; and
generating a file or file group including the read TOC data and the at least one audio data set generated by the transcoding, the file or file group having order information specifying order of the at least one audio data set generated by the transcoding as originally recorded on the compact disk.

13. A method executed by a device, the method comprising:
receiving, from an external device, a file or file group including at least one audio data set generated by transcoding at least one audio data set encoded and recorded on a compact disk, and TOC data indicating playback start timings at which the at least one audio data set is played sequentially in recorded order as the at least one audio data set is recorded on the compact disk, the file or file group having order information specifying order of the at least one audio data set generated by the transcoding as originally recorded on the compact disk;
storing the received file or file group;
transmitting the TOC data included in the stored file or file group to a server device;
receiving at least one audio attribute data set distributed from the server device in response to the transmitted TOC data;
specifying at least one audio attribute data set respectively corresponding to the stored at least one audio data set, from among the received at least one audio attribute data set, on the basis of the order information; and
updating the file or file group by adding the specified at least one audio attribute data set to the at least one audio data set corresponding to the at least one audio attribute data set.
